# EUROPEAN PATENT SPECIFICATION

(11) **EP 1 849 304 B1**
(45) Date of publication and mention of the grant of the patent: **15.12.2010**
(21) Application number: 06733835.0
(22) Date of filing: 24.01.2006
(51) Int. Cl.: H04N 7/50

(54) **METHOD AND APPARATUS FOR REAL-TIME FRAME ENCODING**
VERFAHREN UND VORRICHTUNG ZUR FRAMEKODIERUNG IN ECHTZEIT
METHODE ET DISPOSITIF POUR CODAGE DE CADRES EN TEMPS REEL

(30) Priority: 28.01.2005 US 647824 P
(43) Date of publication of application: 31.10.2007
(73) Proprietor: Thomson Licensing, 92130 Issy-les-Moulineaux (FR)
(72) Inventor: RICHARDSON, John, William, Crystal Lake, Illinois 60014 (US); GOEDEKEN, Richard, Edwin, Somerset, New Jersey 08873 (US)
(74) Representative: Patentanwälte Hofstetter, Schurack & Skora
(86) International application number: PCT/US2006/002415
(87) International publication number: WO 2006/083614

(56) References cited:
- WO-A-2004/030369
- US-A1- 2002 025 001
- LIANG Y J ET AL: "Low-complexity intra/inter mode-decision for H.264/AVC video coder" INTELLIGENT MULTIMEDIA, VIDEO AND SPEECH PROCESSING, 2004. PROCEEDINGS OF 2004 INTERNATIONAL SYMPOSIUM ON HONG KONG, CHINA OCT. 20-22, 2004, PISCATAWAY, NJ, USA,IEEE, 20 October 2004 (2004-10-20), pages 53-56, XP010801382 ISBN: 0-7803-8687-6
- IVERSON V ET AL: "Real-time H.264/AVC codec on intel architectures" IMAGE PROCESSING, 2004. ICIP '04. 2004 INTERNATIONAL CONFERENCE ON SINGAPORE 24-27 OCT. 2004, PISCATAWAY, NJ, USA,IEEE, 24 October 2004 (2004-10-24), pages 757-760, XP010785113 ISBN: 0-7803-8554-3
- CHANG A ET AL: "Fast multi-block selection for H.264 video coding" CIRCUITS AND SYSTEMS, 2004. ISCAS '04. PROCEEDINGS OF THE 2004 INTERNATIONAL SYMPOSIUM ON VANCOUVER, BC, CANADA 23-26 MAY 2004, PISCATAWAY, NJ, USA,IEEE, US, 23 May 2004 (2004-05-23), pages III-817, XP010719389 ISBN: 0-7803-8251-X
- HYUNGJOON KIM ET AL: "Low-complexity macroblock mode selection for H.264/AVC encoders" IMAGE PROCESSING, 2004. ICIP '04. 2004 INTERNATIONAL CONFERENCE ON SINGAPORE 24-27 OCT. 2004, PISCATAWAY, NJ, USA,IEEE, 24 October 2004 (2004-10-24), pages 765-768, XP010785115 ISBN: 0-7803-8554-3
- KIM Y-H ET AL: "Adaptive mode decision for H.264 encoder" ELECTRONICS LETTERS, IEE STEVENAGE, GB, vol. 40, no. 19, 16 September 2004 (2004-09-16), pages 1172-1173, XP006022675 ISSN: 0013-5194
- YANFEI SHEN ET AL: "Fast mode selection based on texture analysis and local motion activity in H.264/JVT" COMMUNICATIONS, CIRCUITS AND SYSTEMS, 2004. ICCCAS 2004. 2004 INTERNATIONAL CONFERENCE ON CHENGDU, CHINA 27-29 JUNE 2004, PISCATAWAY, NJ, USA,IEEE, US, 27 June 2004 (2004-06-27), pages 539-542Vol1, XP010731803 ISBN: 0-7803-8647-7
- TANIZAWA A ET AL: "A study on fast rate-distortion optimized coding mode decision for H.264" IMAGE PROCESSING, 2004. ICIP '04. 2004 INTERNATIONAL CONFERENCE ON SINGAPORE 24-27 OCT. 2004, PISCATAWAY, NJ, USA,IEEE, 24 October 2004 (2004-10-24), pages 793-796, XP010785122 ISBN: 0-7803-8554-3
- WU D ET AL: "Fast INTER mode decision with adaptive thresholds for H.264 encoding" CONSUMER ELECTRONICS, 2004 IEEE INTERNATIONAL SYMPOSIUM ON READING, UK SEPT. 1-3, 2004, PISCATAWAY, NJ, USA,IEEE, 1 September 2004 (2004-09-01), pages 406-409, XP010755903 ISBN: 0-7803-8527-6
- ZHOU: "Scalable Intra Prediction" 10 May 2002 (2002-05-10), ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX , XP030005141
- ZHOU: "Scalable Intra Prediction" ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. JVT-C033, 10 May 2002 (2002-05-10), XP030005141

## Description

### BACKGROUND OF THE INVENTION

The present invention generally relates to communications systems and, more particularly, to an encoder for use in encoding real-time data, e.g., video.

Real-time H.264 encoding is very computationally demanding and requires a significant amount of memory and computational resources. Traditionally, video encoders are implemented in hardware in the form of an application specific integrated circuit (ASIC). However, due to advancing personal computer (PC) technology, most high-end computers now have the processing power to perform real-time audio and video compression at modest resolutions. In the case of H.264, current high-end general purpose PC processors, such as the Pentium^{®} IV, are able to provide enough processing power to encode Common Intermediate Format (CIF) (352x288 pixels/frame, 30 frames/second) video in real-time.

This shift from hardware-based solutions to software-based solutions for video encoder implementations creates new challenges that must be overcome. More specifically, in a software-based video encoder it is important that each video frame (frame) be encoded within an amount of time that is less than, or equal to, the amount of time allocated for the display of a frame (this amount of time is referred to herein as the display time, or, equivalently, by its inverse the display rate). However, an H.264 encoder motion estimation algorithm may use an iterative algorithm that iteratively refines its motion search until it either reaches a satisfactory threshold (i.e., a close match) or exhausts all possible search points. As such, execution time is not constant and may vary widely. Also, software implementations are by their nature less deterministic in execution performance than their hardware counterparts, resulting in further execution time variations. For example, processor speed directly affects software execution time. Thus, in a software-based video encoder the encoding of some frames may be faster than the display rate, while the encoding of other frames may be slower than the display rate. As long as the average encoding speed is equal to the display rate over a short latency window, the video encoder will perform as required. However, if the average encode speed drops below the display rate over the short latency window, then the video encoder will not perform as required resulting in possible dropped frames and decreased performance.

Minhua Zhou: "Scalable Intra Prediction", Joint Video Team (JVT) of ISO/IEC MPEG & ITU-T VCEG, 3rd Meeting: Fairfax, Virginia, USA, 6-10 March, 2002, Document JVT-C33 proposes a complexity scalable intra prediction scheme for H.26L video coding to satisfy the different needs of low- and high-end H.26L devices.

### SUMMARY OF THE INVENTION

We have observed that it is possible to constrain the operation of a video encoder such that execution time is limited and, therefore, more deterministic without detrimentally affecting performance. As a result, such a constrained video encoder performs as required and encodes video frames, on average, at least as fast as the display rate, if not faster. Therefore, and in accordance with the principles of the invention, a video encoder assigns an amount of time for processing a macroblock of data; and selects a subset of available encoding modes as a function of the assigned amount of time; wherein at least one of the encoding modes in the selected subset is used for processing the macroblock.

In an embodiment of the invention, a device incorporates a software-based H.264 video encoder for providing compressed, or encoded, video data The H.264 encoder incorporates a timer algorithm such that the time available to the H.264 encoder within the macroblock mode decision and motion estimation framework is constrained, or restricted. The particular amount of time available to the H.264 encoder then determines a subset of available encoding modes that the H.264 encoder can use to encode a macroblock. As a result, a method is provided to enforce real-time frame encoding without greatly affecting the quality of the encoded video.

### BRIEF DESCRIPTION OF THE DRAWINGS

FIG. 1 shows an illustrative device in accordance with the principles of the invention;

FIG. 2 shows an illustrative block diagram of an H.264 encoder embodying the principles of the invention;

FIG. 3 shows an illustrative flow chart for use in a video encoder in accordance with the principles of the invention;

FIGs. 4-5 show illustrative techniques for detecting whether or not to constrain encoding in accordance with the principles of the invention;

FIGs. 6-7 show other illustrative flow charts for use in a video encoder in accordance with the principles of the invention; and

FIG. 8 shows a table of subsets of encoding modes in accordance with the principles of the invention.

### DETAILED DESCRIPTION

Other than the inventive concept, the elements shown in the figures are well known and will not be described in detail. Also, familiarity with video broadcasting, receivers and video encoding is assumed and is not described in detail herein. For example, other than the inventive concept, familiarity with current and proposed recommendations for TV standards such as NTSC (National Television Systems Committee), PAL (Phase Alternation Lines), SECAM (SEquential Couleur Avec Memoire) and ATSC (Advanced Television Systems Committee) (ATSC) is assumed. Likewise, other than the inventive concept, transmission concepts such as eight-level vestigial sideband (8-VSB), Quadrature Amplitude Modulation (QAM), and receiver components such as a radio-frequency (RF) front-end, or receiver section, such as a low noise block, tuners, demodulators, correlators, leak integrators and squarers is assumed. Similarly, other than the inventive concept, formatting and encoding methods (such as Moving Picture Expert Group (MPEG)-2 Systems Standard (ISO/IEC 13818-1)) and, in particular, H.264: International Telecommunication Union, "Recommendation ITU-T H.264: Advanced Video Coding for Generic Audiovisual Services," *ITU-T,* 2003, for generating bit streams are well-known and not described herein. In this regard, it should be noted that only that portion of the inventive concept that is different from known H.264 encoding is described below and shown in the figures. As such, H.264 video encoding concepts of pictures, frames, fields, macroblocks, luma, chroma, Intra-frame prediction, Inter-frame prediction, etc., is assumed and not described herein. It should also be noted that the inventive concept may be implemented using conventional programming techniques, which, as such, will also not be described herein. Finally, like-numbers on the figures represent similar elements.

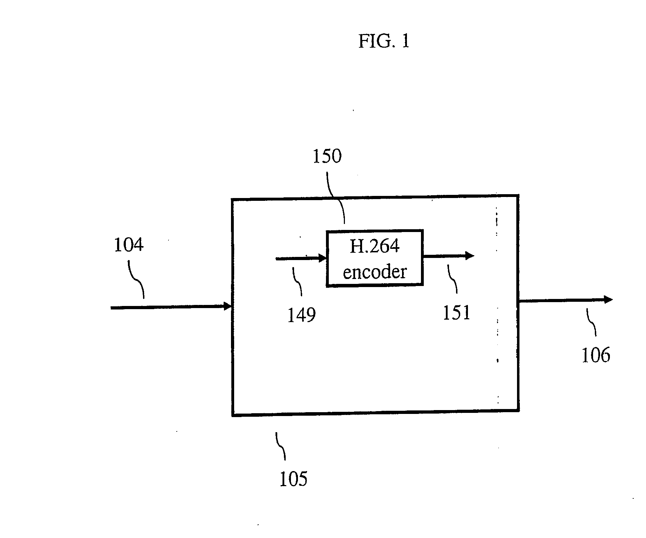

An illustrative embodiment of a device 105 in accordance with the principles of the invention is shown in FIG. 1. Device 105 is representative of any processor-based platform, e.g., a PC, a server, a personal digital assistant (PDA), a cellular telephone, etc. In this regard, device 105 includes one or more processors with associated memory (not shown). Device 105 includes H.264 encoder 150. Other than the inventive concept, H.264 encoder 150 receives a video signal 149 (which is, e.g., derived from input signal 104) and, in accordance with ITU-T H.264 (noted above), provides an H.264 encoded video signal 151. The latter may be included as a part of an output signal 106, which represents an output signal from device 105 to, e.g., another device, or network (wired, wireless, etc.). It should be noted that although FIG. 1 shows that H.264 encoder 150 is a part of device 105, the invention is not so limited and H.264 encoder 150 may be external to device 105, e.g., physically adjacent, or deployed elsewhere in a network (cable, Internet, cellular, etc.) such that device 105 can use H.264 encoder 150 for providing an H.264 encoded video signal. For the purposes of this example only, it is assumed that video signal 149 is a real-time video signal conforming to a CIF (352x288 pixels/frame, 30 frames/second) video format.

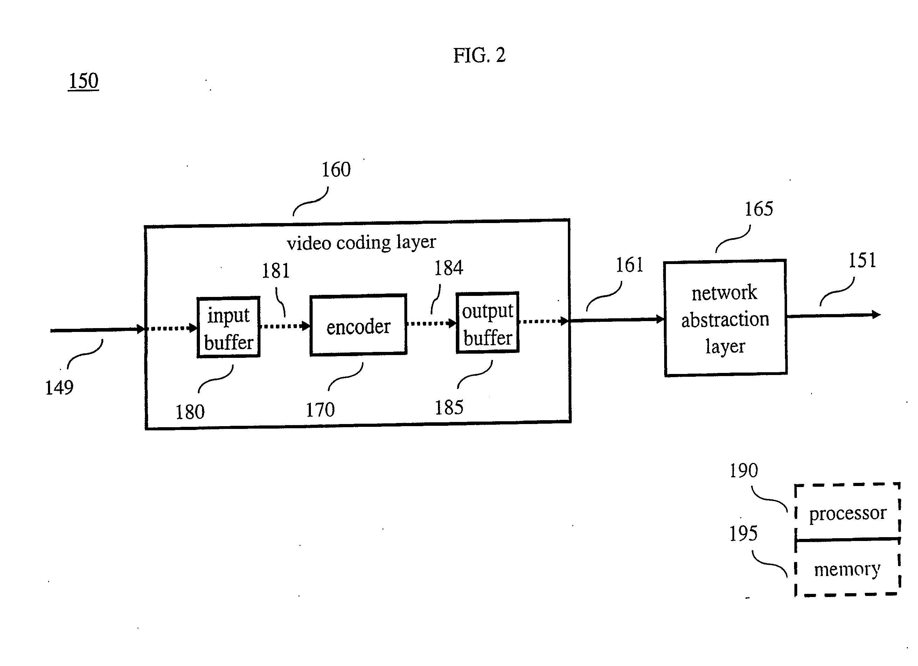

An illustrative block diagram of H.264 encoder 150 is shown in FIG. 2. Illustratively, H.264 encoder 150 is a software-based video encoder as represented by processor 190 and memory 195 shown in the form of dashed boxes in FIG. 2. In this context, computer programs, or software are stored in memory 195 for execution by processor 190. The latter is representative of one or more stored-program control processors and does not have to be dedicated to the video encoder function, e.g., processor 190 may also control other functions of device 105. Memory 195 is representative of any storage device, e.g., random-access memory (RAM), read-only memory (ROM), etc.; may be internal and/or external to processor H.264 encoder 150; and is volatile and/or non-volatile as necessary. As known in the art, H.264 encoded video signal 151 has two layers as represented by video coding layer 160 and network abstraction layer 165. Other than the inventive concept, video coding layer 160 provides an encoded signal 161, which comprises the video coded data as known in the art, e.g., video sequence, picture, slice and macroblock. Video coding layer 160 comprises an input buffer 180, an encoder 170 and an output buffer 185. The input buffer 180 stores video data from video signal 149 for processing by encoder 170. Other than the inventive concept, described below, encoder 170 compresses the video data in accordance with H.264 and provides compressed video data to output buffer 185. The latter provides the compressed video data as encoded signal 161 to the network abstraction layer 165, which formats the encoded signal 161 in a manner that is appropriate for conveyance on a variety of communications channels or storage channels to provide H.264 video encoded signal 151. For example, network abstraction layer 165 facilitates the ability to map encoded signal 161 to transport layers such as RTP (real-time protocol)/IP (Internet Protocol), file formats (e.g., ISO MP4 (MPEG-4 standard (ISO 14496-14)) for storage and MMS), H.32X for wireline and wireless conversational services), MPEG-2 systems for broadcasting services, etc.

As noted earlier, a software-based video encoder may not perform as required because of the variability in execution time. In particular, a video encoder must encode video frames (frames) either faster than or equal to the display rate. Since the time to encode a frame in a software-based video encoder may vary widely because of algorithm design and processor speed, the software-based video encoder may not perform as required resulting in possible dropped frames and decreased performance. However, we have observed that it is possible to constrain the operation of a video encoder such that execution time is limited and, therefore, more deterministic without detrimentally affecting performance. As a result, such a constrained video encoder performs as required and encodes frames, on average, at least as fast as the display rate, if not faster. Therefore, and in accordance with the principles of the invention, a video encoder assigns an amount of time for processing a macroblock of data; and selects a subset of available encoding modes as a function of the assigned amount of time; wherein at least one of the encoding modes in the selected subset is used for processing the macroblock. In this regard, video coding layer 160 of H.264 encoder 150 incorporates the inventive concept.

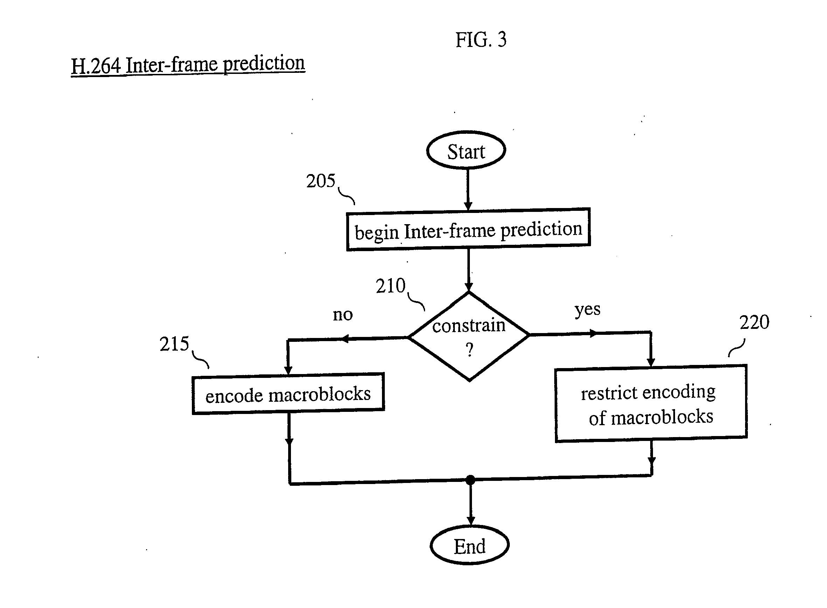

An illustrative flow chart is shown in FIG. 3 that outlines one implementation of the inventive concept in the context of an H.264 encoder. In this example, video coding layer 160, of H.264 encoder 150, utilizes a timer algorithm during Inter-frame prediction, i.e., during the macroblock mode decision and motion estimation framework of H.264 encoding. The macroblock mode decision portion of the video encoding algorithm is illustratively chosen as the target for time control because it consumes a greater portion of encoding time than any other element of H.264, and because it exhibits the largest amount of variance in encoding time. In addition, the iteratively refining nature of the H.264 macroblock mode decision algorithm allows the time control method to break out of the macroblock mode decision loop early and still deliver a valid video bit stream with adequate compression performance. As a result, implementation of the time constraint algorithm within the mode decision and motion estimation framework provides a method to enforce real-time frame encoding without greatly affecting the quality of the encoded video. Referring now to FIG. 3 in more detail, video coding layer 160 begins Inter-frame prediction for a frame of video signal 149 in step 205. In step 210, a check is made if video coding layer 160 should be constrained when encoding macroblocks of the frame. If video coding layer 215 does not have to be constrained, then video coding layer 160 encodes macroblocks as known in the art in step 215. However, if video coding layer 160 does have to be constrained, then a timer algorithm is enabled to constrain the encoding of macroblocks in step 220. The timer algorithm (described further below) is implemented such that it constrains the amount of time that video coding layer 160 spends within the macroblock mode decision and motion estimation framework.

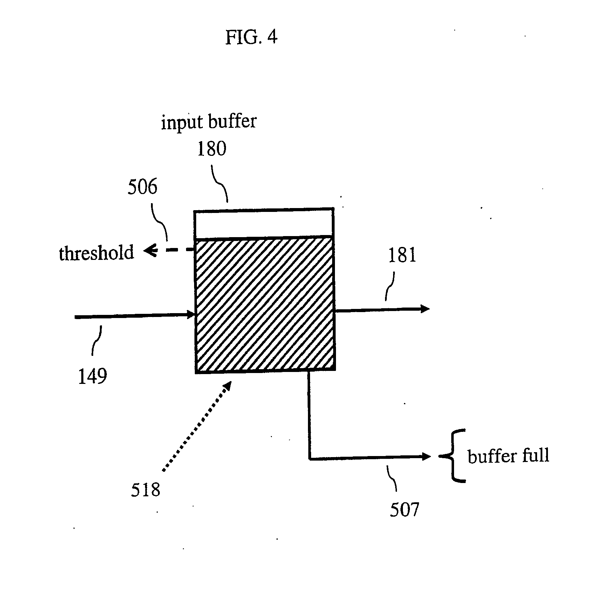

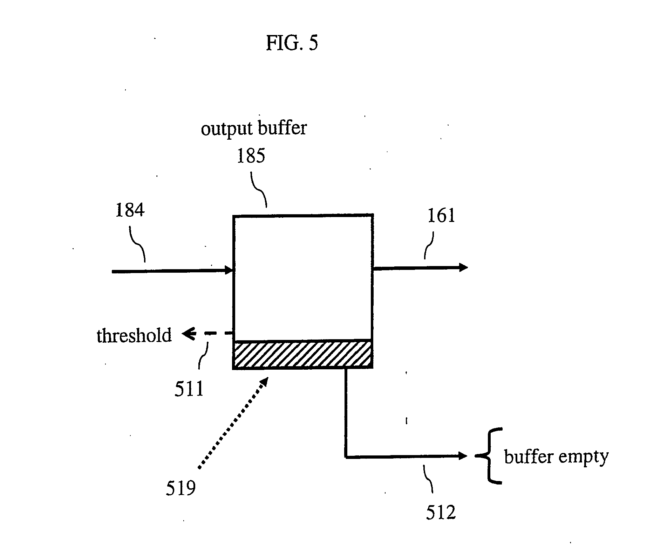

Turning briefly to FIGs. 4 and 5, some examples are shown for use in step 210 for determining whether or not to constrain encoding. In the context of FIG. 4, one method of determining whether or not to constrain encoding utilizes the amount, or level, of data stored in input buffer 180. In particular, if the amount of data stored in the input buffer 180 exceeds a predetermined threshold 506 (as represented by diagonal shading 518), then input buffer 180 provides a "buffer full" signal 507 to processor 190. The "buffer full" signal 507 represents, in effect, whether or not the video data is being processed fast enough by video encoder 170. In the context of FIG. 5, another method of determining whether or not to constrain encoding utilizes the amount, or level, of data stored in output buffer 185. In particular, if the amount of data stored in the output buffer 185 drops below a predetermined threshold 511 (as represented by diagonal shading 519), then output buffer 185 provides a "buffer empty" signal 512 to processor 190. The "buffer empty" signal 512 represents, in effect, whether or not the encoded video data is being provided fast enough by video encoder 170. In addition, it should be noted that the techniques shown in FIGs. 4 and 5 may also be combined, e.g., video encoding may be constrained only if the input buffer 180 if full and the output buffer 185 is empty. However, it should be noted that the inventive concept is not so limited and other mechanisms can be used to detect the possibility of inadequate performance levels such that it is desirable to start constrained encoding.

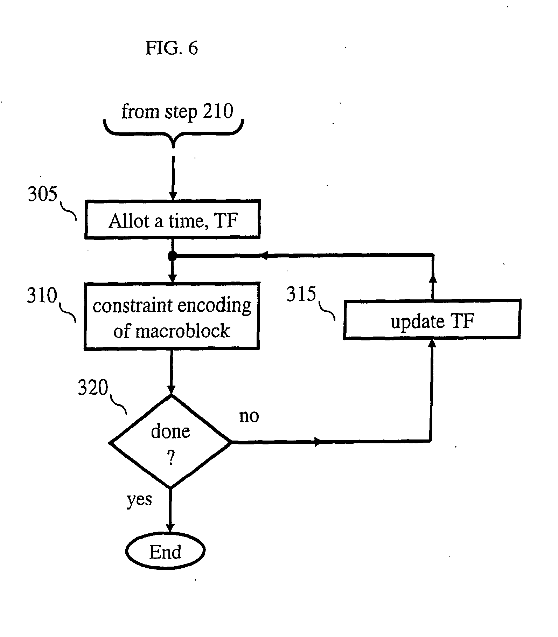

Referring now to FIG. 6, a more detailed view of step 220 of FIG. 3 is shown. In step 305, an amount of time, TF, is allotted to encoding of the frame. This initial value of TF represents the amount of time available for processing all of the macroblocks in the frame. The value of TF is less than the display time. In the context of CIF video, TF is less than .033 seconds. In this allocation, encoder overhead should be determined, or approximated, so that TF should not include processing time that is not related to mode decision and motion estimation. Other than the inventive concept, encoder overhead can be determined adaptively using timers and averaging buffers as known in the art. It should be noted that the amount of time, TF, may also be further adjusted depending upon the levels of the input buffer 180 and/or the output buffer 185. In step 310, a macroblock of the frame is encoded (described below) in accordance with the principles of the invention. In step 320, a check is made if all of the macroblocks have been processed. If some macroblocks still remain, execution proceeds to step 315, where the value for TF is further reduced by the amount of time taken to process the previous macroblock. In other words, TF now represents the amount of time left to process the remaining macroblocks of the frame. Once all of the macroblocks of the frame have been processed, execution ends.

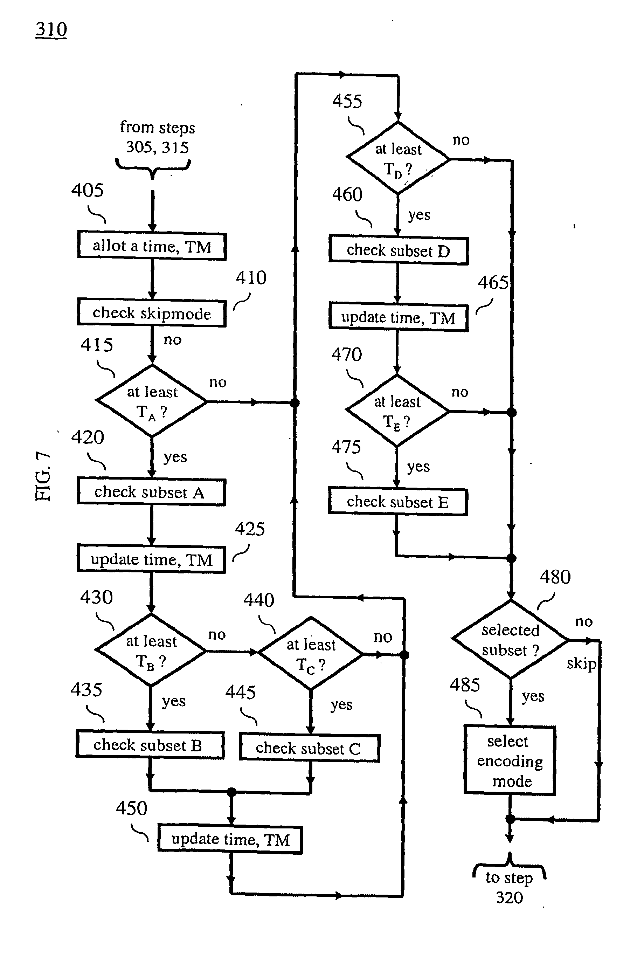

In step 310, macroblocks of a frame are processed in a constrained fashion in accordance with the principles of the invention. An illustrative flow chart for use in step 310 is shown in FIG. 7. In step 405, an amount of time, TM, is allocated for processing a macroblock. This amount of time, TM, is derived from TF. For example, TM may be simply determined by dividing TF by the number of macroblocks that have to be processed. For simplicity, the amount of time, TM, is described herein in the context of "time units." Time units may be determined empirically. For the purposes of this example, a time unit is set equal to 20 microseconds for a Pentium^{®} IV based system with a clock frequency of about 3 gigahertz. In accordance with the principles of the invention, the particular amount of time, TM, available for processing a macroblock determines a subset of available encoding modes that the H.264 encoder can use to encode the macroblock. As a result, the inventive concept provides a method to enforce real-time frame encoding without greatly affecting the quality of the encoded video.

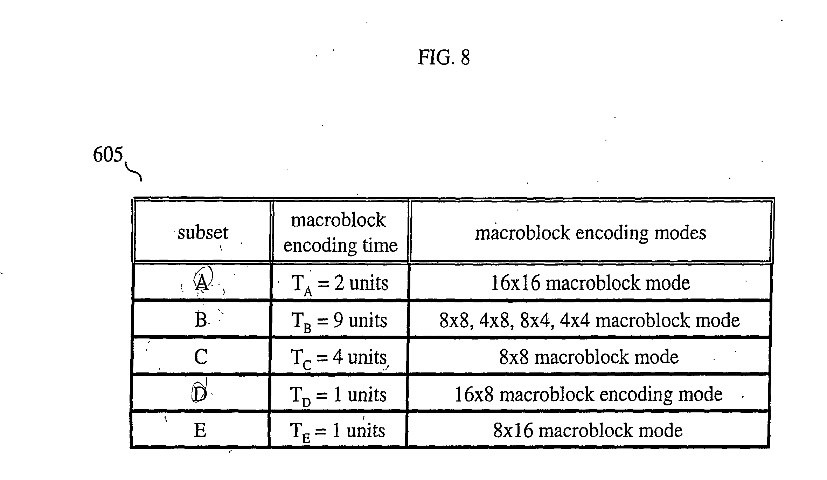

Before continuing with a description of the flow chart of FIG. 7, attention should briefly be directed to table 605 of FIG. 8. In accordance with the principles of the invention, the macroblock encoding modes of H.264 are divided into a number of subsets, each subset associated with an amount of encoding time. This is illustrated in table 605. For example, as can be observed from table 605, subset encoding mode A requires 2 time units and comprises the 16x 16 macroblock mode. As such, if the video encoder selects subset encoding mode A, the 16x 16 macroblock mode is checked for the macroblock. As illustration only, the assignments shown in table 605 are used in the flow chart of FIG. 7.

Turning back to FIG. 7, in step 410, video encoder 170 checks skip mode as known in the art. In particular, the video encoder determines the distortion and output bits if the video encoder does choose the skip mode. Execution then proceeds to step 415, which checks the value of TM to determine if at least T_{A} time units remain for processing the macroblock. If at least T_{A} time units do not remain then execution proceeds to step 455 (described below). However, if at least T_{A} time units do remain, then the video encoder checks the encoding modes associated with subset A in step 420. That is, the video encoder encodes the macroblock into a number of coded bits using the encoding modes for the selected subset. For example, using the associations shown in table 605 of FIG. 8, the video encoder encodes the macroblock using the 16x16 macroblock mode. After encoding, the amount of time taken to encode the macroblock is subtracted from TM in step 425.

In step 430, a check is made of TM to determine if at least T_{B} time units remain for processing the macroblock. If at least T_{B} time units do remain, then the video encoder checks the encoding modes associated with subset B in step 435. That is, the video encoder encodes the macroblocK into a number of coded bits using the encoding modes for the selected subset. For example, using the associations shown in table 605 of FIG. 8, the video encoder encodes the macroblock using the four macroblock modes: 8x8, 4x8, 8x4 and 4x4.

However, if at least T_{B} time units do not remain in step 430 then execution proceeds to step 440. In the latter step, a check is made of TM to determine if at least T_{C} time units remain for processing the macroblock. If at least T_{C} time units do not remain then execution proceeds to step 455 (described below). However, if at least T_{C} time units do remain, then the video encoder checks the encoding modes associated with subset C in step 445. For example, using the associations shown in table 605 of FIG. 8, the video encoder encodes the macroblock using the 8x8 macroblock mode. If either subset B or subset C were selected, the amount of time taken to encode the macroblock is subtracted from TM in step 450.

In step 455, a check is made of TM to determine if at least T_{D} time units remain for processing the macroblock. If at least T_{D} time units do not remain then execution proceeds to step 480 (described below). However, if at least T_{D} time units do remain, then the video encoder checks the encoding modes associated with subset D in step 460. For example, using the associations shown in table 605 of FIG. 8, the video encoder encodes the macroblock using the 16x8 macroblock mode. After encoding, the amount of time taken to encode the macroblock is subtracted from TM in step 465.

In step 470, a check is made of TM to determine if at least T_{E} time units remain for processing the macroblock. If at least T_{E} time units do not remain then execution proceeds to step 480 (described below). However, if at least T_{E} time units do remain, then the video encoder checks the encoding modes associated with subset E in step 4475. For example, using the associations shown in table 605 of FIG. 8, the video encoder encodes the macroblock using the 8x16 macroblock mode.

In step 480, a check is made to determine if any subsets were selected for encoding the macroblock. If no subsets were selected because of insufficient processing time being available, then the macroblock is skipped and execution proceeds to step 320 of FIG. 6. However, if at least one subset was selected, then, in step 485, the video encoder selects an encoding mode from the selected subsets. This selected encoding mode is the one that is actually used for encoding the macroblock for transmission and/or storage. In particular, for each encoding mode of the selected subsets, the video encoder counts the number of output coded bits and calculates the distortion between a re-constructed macroblock (derived from the output coded bits) and the original macroblock using any one of a number of known techniques. For example, the video encoder can use the sum of absolute differences (SAD) between the re-constructed macroblock and the original macroblock; the sum of square error (SSE) distortion between the re-constructed macroblock and the original macroblock; or a measure of the root mean square (RMS). Following this, a rate-distortion optimization (RDO) metric is calculated as known in the art for each encoding mode. In particular, the RDO combines the output coded bits and the calculated distortion factors for each encoding mode. For example: RDO = Coef_A * Number_Coded_Bits + Coef_B * Distortion; where "Coef_A" and "Coef_B" are weighting coefficients, which can be determined empirically, "Number_Coded_Bits" is the number of output coded bits for an encoding mode and "Distortion" is the calculated distortion factor for the encoding mode. Once each of the RDO values is determined, the video encoder selects the encoding mode with the smaller RDO as the actual encoding mode. After selecting the actual encoding mode, execution proceeds to step 320.

As described above, and in accordance with the inventive concept, a video encoder may trade-off coding efficiency for a more deterministic execution time by constraining video encoder operation. Thus, the video encoder adaptively maintains real-time encoding performance. In particular, the time constraint algorithm described above basically eliminates choices if there is not enough time left to process a macroblock. For example, in the context of the embodiment described above, if the video encoder only has enough time to check the 16x16 and 16x8 modes for a macroblock, then the video encoder will choose the best of these two modes instead of checking other modes. Thus, and in accordance with the principles of the invention, it is possible to enforce a maximum frame encode time with little, if no, decrease in encoding efficiency. Indeed, by using this method, more than 95 percent of all frames will be encoded within the time assigned, thus enabling an encoder to maintain real-time performance regardless of the input. For example, a constrained video encoder may only increase the encoded bit stream by 2-3% in size but can save 15-20% in time to guarantee real-time operation.

It should be noted that although the inventive concept was illustrated in the context of H.264 Inter-frame prediction, the inventive concept is not so limited and is application to other portions of H.264 as well as other types of video encoding. For example, the inventive concept is also applicable to Intra-frame prediction. Further, although illustrated in the context of dynamically selecting the constrained encoding mode as represented by step 210 of FIG. 3, this step can be eliminated and a video encoder can be simply operated in a constrained mode in accordance with the principles of the invention. In fact, a constrained mode may be a configurable option in the video encoder. It should also be noted that the other variations are possible. For example, the number of reference frames that are used for motion estimation purposes can be adjusted based on available time units. Likewise, if there are a limited amount of time units allocated to a macroblock, then only the most recent reference picture may be used. Further, known complexity metrics of the image and macroblocks, such as the sum of absolute differences (SAD) between two blocks, and/or variance, may also be used as factors for allocating time units and encoding modes.

In view of the above, the foregoing merely illustrates the principles of the invention and it will thus be appreciated that those skilled in the art will be able to devise numerous alternative arrangements which, although not explicitly described herein, embody the principles of the invention and are within its spirit and scope. For example, although illustrated in the context of separate functional elements, these functional elements may be embodied in one or more integrated circuits (ICs). Similarly, although shown as separate elements, any or all of the elements may be implemented in a stored-program-controlled processor, e.g., a digital signal processor, which executes associated software, e.g., corresponding to one or more of the steps shown in, e.g., FIGs. 3, 6 and/or 7, etc. Further, the principles of the invention are applicable to other types of communications systems, e.g., satellite, Wireless-Fidelity (Wi-Fi), cellular, etc. Indeed, the inventive concept is also applicable to stationary or mobile receivers. It is therefore to be understood that numerous modifications may be made to the illustrative embodiments and that other arrangements may be devised without departing from the scope of the present invention as defined by the appended claims.

## Claims

1. A method for use in a video encoder, the method comprising:
(a) assigning (405) an amount of processing time (T_{M}) for processing a macroblock of data;
(b) associating an amount of encoding time (T_{A}, T_{B}, T_{C}, T_{D}, T_{E}) to each plurality of subsets of available macroblock encoding modes;
and in a predetermined order for said subsets provided by an algorithm, performing for subsets the steps of:
(c) checking (415, 430, 440, 455, 470) if the associated amount of encoding time is smaller than or equal to the assigned amount of processing time and if so, selecting this subset of said available macroblock encoding modes and encoding the macroblock into a number of coded bits using the encoding modes of said selected subset;
and as long as the end of the algorithm is not yet reached, also go to step (f)
(d) subtracting (425, 450, 465) the amount of time taken for said encoding of the macroblock from the assigned amount of processing time to update the amount of processing time; and
(e) returning to step (c) ;
(f) selecting one of the encoding modes used in step (c) for encoding of the macroblock based on the number of output coded bits and on a calculated distortion.

2. The method of claim 1, wherein the macroblock is a part of a motion compensated video frame.

3. The method of claim 1, wherein the macroblock is an intra-macroblock of a video frame.

4. The method of claim 1, further comprising the steps of:
testing encoding modes in the selected subset to determine which encoding mode achieves maximum coding efficiency for the macroblock; and
using the determined encoding mode for encoding the macroblock.

5. The method of claim 1, further comprising the step of:
repeating steps (a) to (f) for more than one macroblock of a video frame.

6. The method of claim 1, further comprising the step of:
checking for an occurrence of a condition in the video encoder; and
if the condition has occurred, performing steps (a) to (f) ;
wherein the condition represents inadequate video encoder performance.

7. The method of claim 6, wherein the checking step checks if an amount of data in an input buffer goes above a predetermined threshold as a prerequisite to performing steps (a) to (f).

8. The method of claim 6, wherein the checking step checks if an amount of data in an output buffer goes below a predetermined threshold as a prerequisite to performing steps (a) to (f).

9. The method of claim 6, wherein the checking step checks if an amount of data in an input buffer exceeds a predetermined threshold and if an amount of data in an output buffer goes below a predetermined threshold as a prerequisite to performing steps (a) to (f).

10. The method of claim 1, wherein the amount of processing time is determined by at least one of the following image and macroblock complexity factors: a sum of absolute differences (SAD) between two blocks, and a variance.

11. The method of claim 1, further comprising:
adjusting a number of reference frames used for motion estimation purposes as a function of the assigned amount of processing time available for processing the macroblock of data.

12. A video encoder system comprising:
a video encoder for encoding the data and for providing encoded data; a
wherein the video encoder adaptively maintains real-time encoding performance by restricting encoding to using at least one subset of available encoding modes by using the method of any of claims 1 to 11.

## Patentansprüche

1. Verfahren zum Verwenden in einem Videocodierer, wobei das Verfahren umfasst:
(a) Zuweisen (405) eines Betrags an Verarbeitungszeit (T_{M}) für die Verarbeitung eines Makroblocks von Daten;
(b) Zuordnen eines Betrags an Codierungszeit (T_{A}, T_{B}, T_{C}, T_{D}, T_{E}) zu jeder Teilmenge einer Mehrzahl von Teilmengen verfügbarer Makroblock-Codierungsbetriebsarten;
und in einer vorgegebenen Reihenfolge für die durch einen Algorithmus bereitgestellten Teilmengen, Ausführen der folgenden Schritte für die Teilmengen:
(c) Prüfen (415, 430, 440, 455, 470), ob der zugeordnete Betrag an Codierungszeit kleiner oder gleich dem zugewiesenen Betrag an Verarbeitungszeit ist, und wenn das der Fall ist, Auswählen dieser Teilmenge der verfügbaren Makroblock-Codierungsbetriebsarten und Codieren des Makroblocks zu einer Anzahl codierter Bits unter Verwendung der Codierungsbetriebsarten der ausgewählten Teilmenge; und solange das Ende des Algorithmus noch nicht erreicht ist, anderenfalls Gehen zu Schritt (f)
(d) Subtrahieren (425, 450, 465) des Betrags an Zeit, die das Codieren des Makroblocks dauert, von dem zugewiesenen Betrag an Verarbeitungszeit zum Aktualisieren des Betrags an Verarbeitungszeit; und
(e) Zurückkehren zu Schritt (c);
(f) Auswählen einer der Codierungsbetriebsarten, die in Schritt (c) für das Codieren des Makroblocks verwendet werden, auf der Grundlage der Anzahl ausgegebener codierter Bits und einer berechneten Verzerrung.

2. Verfahren nach Anspruch 1, bei dem der Makroblock ein Teil eines bewegungskompensierten Videoeinzelbilds ist.

3. Verfahren nach Anspruch 1, bei dem der Makroblock ein Intra-Makroblock eines Videoeinzelbilds ist.

4. Verfahren nach Anspruch 1, das ferner die folgenden Schritte umfasst:
Prüfen von Codierungsbetriebsarten in der ausgewählten Teilmenge, um zu bestimmen, welche Codierungsbetriebsart die maximale Codierungseffizienz für den Makroblock erreicht; und
Verwenden der bestimmten Codierungsbetriebsart zum Codieren des Makroblocks.

5. Verfahren nach Anspruch 1, das ferner die folgenden Schritte umfasst:
Wiederholen der Schritte (a) bis (f) für mehr als einen Makroblock eines Videoeinzelbilds.

6. Verfahren nach Anspruch 1, das ferner den folgenden Schritt umfasst:
Prüfen auf ein Auftreten einer Bedingung in dem Videocodierer; und
falls die Bedingung aufgetreten ist, Ausführen der Schritte (a) bis (f);
wobei die Bedingung eine unzulängliche Videocodiererleistung repräsentiert.

7. Verfahren nach Anspruch 6, bei dem der Prüfschritt als eine Vorbedingung zum Ausführen der Schritte (a) bis (f) prüft, ob ein Betrag an Daten in einem Eingangspuffer über einen vorgegebenen Schwellenwert geht.

8. Verfahren nach Anspruch 6, bei dem der Prüfschritt als eine Vorbedingung zum Ausführen der Schritte (a) bis (f) prüft, ob ein Betrag an Daten in einem Ausgangspuffer unter einen vorgegebenen Schwellenwert geht.

9. Verfahren nach Anspruch 6, bei dem der Prüfschritt als eine Vorbedingung zum Ausführen der Schritte (a) bis (f) prüft, ob ein Betrag an Daten in einem Eingangspuffer einen vorgegebenen Schwellenwert übersteigt und ob ein Betrag an Daten in einem Ausgangspuffer unter einen vorgegebenen Schwellenwert geht.

10. Verfahren nach Anspruch 1, bei dem der Betrag an Verarbeitungszeit durch mindestens einen der folgenden Bild- und Makroblockkomplexitätsfaktoren bestimmt wird: eine Summe der absoluten Differenzen (SAD) zwischen zwei Blöcken und eine Streuung.

11. Verfahren nach Anspruch 1, das ferner umfasst:
Einstellen einer Anzahl von Referenzteilbildern, die für Bewegungsschätzungszwecke verwendet werden, als eine Funktion des zugewiesenen Betrags an für die Verarbeitung des Makroblocks von Daten verfügbarer Verarbeitungszeit.

12. Videocodierersystem, das umfasst:
einen Videocodierer zum Codieren der Daten und zum Bereitstellen codierter Daten;
wobei der Videocodierer durch Beschränken der Codierung auf die Verwendung mindestens einer Teilmenge verfügbarer Codierungsbetriebsarten unter Verwendung des Verfahrens nach einem der Ansprüche 1 bis 11 adaptiv eine Echtzeitcodierungsleistung aufrechterhält.

## Revendications

1. Procédé destiné à être utilisé dans un encodeur vidéo, le procédé comprenant :
(a) l'attribution (405) d'une quantité de temps de traitement (T_{M}) pour traiter un macrobloc de données ;
(b) l'association d'une quantité de temps d'encodage (T_{A}, T_{B}, T_{C}, T_{D}, T_{E}) à chacun d'une pluralité de sous-ensembles de modes d'encodage de macrobloc disponibles ;
et dans un ordre prédéterminé pour lesdits sous-ensembles fourni par un algorithme, la réalisation pour les sous-ensembles des étapes consistant à :
(c) vérifier (415, 430, 440, 455, 470) si la quantité associée de temps d'encodage est inférieure ou égale à la quantité attribuée de temps de traitement et si c'est le cas, sélectionner ce sous-ensemble desdits modes d'encodage de macrobloc disponibles et encoder le macrobloc en un nombre de bits codés en utilisant les modes d'encodage dudit sous-ensemble sélectionné ;
et tant que la fin de l'algorithme n'est pas encore atteinte, sinon aller à l'étape (f) ;
(d) soustraire (425, 450, 465) la quantité de temps prise pour ledit encodage du macrobloc de la quantité attribuée de temps de traitement pour mettre à jour la quantité de temps de traitement ; et
(e) retourner à l'étape (c) ;
(f) sélectionner un des modes d'encodage utilisés à l'étape (c) pour l'encodage du macrobloc en fonction du nombre de bits codés émis et d'une distorsion calculée.

2. Procédé selon la revendication 1, dans lequel le macrobloc fait partie d'une image vidéo à compensation de mouvement.

3. Procédé selon la revendication 1, dans lequel le macrobloc est un macrobloc en mode intra d'une image vidéo.

4. Procédé selon la revendication 1, comprenant en outre les étapes consistant à :
tester les modes d'encodage dans le sous-ensemble sélectionné pour déterminer quel mode d'encodage atteint une efficacité de codage maximale pour le macrobloc ; et
utiliser le mode d'encodage déterminé pour encoder le macrobloc.

5. Procédé selon la revendication 1, comprenant en outre l'étape consistant à :
répéter les étapes (a) à (f) pour plus d'un macrobloc d'une image vidéo.

6. Procédé selon la revendication 1, comprenant en outre l'étape consistant à :
vérifier à la recherche d'une occurrence d'une condition dans l'encodeur vidéo ; et
si la condition s'est produite, réaliser les étapes (a) à (f) ;
dans lequel la condition représente une performance inadéquate de l'encodeur vidéo.

7. Procédé selon la revendication 6, dans lequel l'étape de vérification vérifie si une quantité de données dans un bloc d'entrée va au-dessus d'un seuil prédéterminé en tant que condition préalable à la réalisation des étapes (a) à (f).

8. Procédé selon la revendication 6, dans lequel l'étape de vérification vérifie si une quantité de données dans un bloc de sortie va en dessous d'un seuil prédéterminé en tant que condition préalable à la réalisation des étapes (a) à (f).

9. Procédé selon la revendication 6, dans lequel l'étape de vérification vérifie si une quantité de données dans un bloc d'entrée dépasse un seuil prédéterminé et si une quantité de données dans un bloc de sortie va en dessous d'un seuil prédéterminé en tant que condition préalable à la réalisation des étapes (a) à (f).

10. Procédé selon la revendication 1, dans lequel la quantité de temps de traitement est déterminée par au moins un des facteurs de complexité d'image et de macrobloc suivants :
une somme des différences absolues (SAD) entre deux blocs, et une variance.

11. Procédé selon la revendication 1, comprenant en outre :
l'ajustement d'un nombre d'images de référence utilisées à des fins d'estimation de mouvement en tant que fonction de la quantité attribuée de temps de traitement disponible pour traiter le macrobloc de données.

12. Système d'encodeur vidéo comprenant :
un encodeur vidéo pour encoder les données et pour fournir des données encodées ;
dans lequel l'encodeur vidéo maintient de manière adaptative une performance d'encodage en temps réel en limitant l'encodage à l'utilisation d'au moins un sous-ensemble de modes d'encodage disponibles par l'utilisation du procédé selon l'une quelconque des revendications 1 à 11.
